# EUROPEAN PATENT SPECIFICATION

(11) **EP 2 055 874 B1**
(45) Date of publication and mention of the grant of the patent: **01.05.2013**
(21) Application number: 07791227.7
(22) Date of filing: 24.07.2007
(51) Int. Cl.: E05B 65/12, B60R 25/00, B60R 25/02

(54) **CYLINDER LOCK DEVICE FOR VEHICLE**
ZYLINDERSCHLOSSVORRICHTUNG FÜR FAHRZEUG
DISPOSITIF DE SERRURE À CYLINDRE POUR VÉHICULE

(30) Priority: 24.08.2006 JP 2006227589; 24.08.2006 JP 2006227590
(43) Date of publication of application: 06.05.2009
(60) Divisional application: 11001530.2
(73) Proprietor: Kabushiki Kaisha Honda Lock, Miyazaki-shi, Miyazaki 880-0293 (JP)
(72) Inventor: YANO, Hitoshi, Miyazaki-shi, Miyazaki 8800293 (JP)
(74) Representative: Piésold, Alexander James
(86) International application number: PCT/JP2007/064502
(87) International publication number: WO 2008/023525

(56) References cited:
- JP-A- 06 305 464
- JP-A- 10 266 663
- JP-A- 2001 342 768
- JP-A- 2001 342 768
- JP-A- 2002 205 670
- JP-B2- 2 922 828
- JP-B2- 2 922 828
- JP-U- 03 064 884
- JP-U- 03 064 884

## Description

### TECHNICAL FIELD

The present invention relates to a vehicular cylinder lock system that includes a fixed cylinder body, an inner cylinder inserted into and supported by the cylinder body so as to be axially movable and pivotable in a restricted range, an ignition switch, a steering lock mechanism for disabling a steering operation of handlebars, and an operating force output mechanism for converting a pivoting force of the inner cylinder into an operating force for an external mechanism and outputting the operating force, the inner cylinder having set around a pivot axis an OFF position, an ON position at which the ignition switch attains an ON state in response to the inner cylinder pivoting from the OFF position toward one side, a locked position at which the steering lock mechanism is actuated so that steering is disabled in response to the inner cylinder pivoting from the OFF position toward the other side, and an operating force output position at which the operating force output mechanism outputs an operating force in response to the inner cylinder pivoting from the OFF position toward the one side or the other side, and when carrying out either one of a pivoting operation of the inner cylinder from the OFF position to the one of the locked position and the ON position that is disposed on the same side as the operating force output position relative to the OFF position, or a pivoting operation of the inner cylinder from the OFF position to the operating force output position, the inner cylinder being required to be pushed by a defined amount prior to the pivoting operation.

### BACKGROUND ART

A vehicular cylinder lock system is known from Patent Publication 1, in which a battery circuit is connected by pivoting an inner cylinder from an OFF position to an ON position while pushing it, and a seat locked state is released by pivoting the inner cylinder toward a seat lock open position, which is on the same side as the ON position relative to the OFF position, without pushing it.
Patent Publication 1: Japanese Patent No. 2922828

Document JP 2001-342768 A shows a lock system according to the preamble of claim 1.

### DISCLOSURE OF THE INVENTION

### PROBLEMS TO BE SOLVED BY THE INVENTION

In the vehicular cylinder lock system disclosed in Patent Publication 1, disposed between the inner cylinder and a cam that is axially relatively movably but relatively non-pivotably connected to the inner cylinder and is also connected to a steering lock mechanism are a lock that can engage with a lever connected to a seat lock mechanism via a wire and an operating element supported by a cylinder body so that it can move along the axis of the inner cylinder; when the inner cylinder is pivoted from the OFF position to a locked position, engagement of the inner cylinder with the cam is released by pushing the inner cylinder, and it is pivoted from the OFF position to the locked position, and when the inner cylinder is pivoted from the OFF position to the seat open position, the inner cylinder and the lock are engaged with each other by not pushing the inner cylinder, and the lock is pivoted from the OFF position to the seat open position.

That is, in the arrangement disclosed in Patent Publication 1, in order to give an ignition switch ON/OFF function, steering lock function, and seat lock open function, it is necessary to employ the inner cylinder, the lock, the operating element, and the cam; the number of components is therefore large and the structure is complicated, and in order for switching over between connection and disconnection of components with each other to be carried out with good precision, it is necessary to improve the machining precision of each component.

Furthermore, in the arrangement disclosed in Patent Publication 1, the lever is made to slide in response to a pivoting operation of the inner cylinder, so as to pull the wire connected to the lever, thus releasing the seat locked state, but since the connection between the lever and the wire is positioned outside the vehicle body and the cylinder body, there is a possibility of the connection between the lever and the wire being maliciously tampered with, and the seat locked state might be undesirably released.

The present invention has been accomplished in the light of such circumstances, and it is a first object thereof to provide a vehicular cylinder lock system that enables an ignition switch ON/OFF function, a steering lock function and a function of outputting an operating force to an external mechanism to be obtained by a simple arrangement with a smaller number of components, and it is a second object thereof to provide a vehicular cylinder lock system that prevents undesirable release of a locked state of the external mechanism.

### MEANS FOR SOLVING THE PROBLEMS

According to a first aspect of the present invention, there is provided a vehicular cylinder lock system comprising a fixed cylinder body, an inner cylinder inserted into and supported by the cylinder body so as to be axially movable and pivotable in a restricted range, an ignition switch, a steering lock mechanism for disabling a steering operation of handlebars, and an operating force output mechanism for converting a pivoting force of the inner cylinder into an operating force for an external mechanism and outputting the operating force, the inner cylinder having set around a pivot axis an OFF position, an ON position at which the ignition switch attains an ON state in response to the inner cylinder pivoting from the OFF position toward one side, a locked position at which the steering lock mechanism is actuated so that steering is disabled in response to the inner cylinder pivoting from the OFF position toward the other side, and an operating force output position at which the operating force output mechanism outputs an operating force in response to the inner cylinder pivoting from the OFF position toward the one side or the other side, and when carrying out either one of a pivoting operation of the inner cylinder from the OFF position to the one of the locked position and the ON position that is disposed on the same side as the operating force output position relative to the OFF position, or a pivoting operation of the inner cylinder from the OFF position to the operating force output position, the inner cylinder being required to be pushed by a defined amount prior to the pivoting operation, characterized in that the inner cylinder, which integrally has a switch connecting shaft portion connected relatively axially movably within a restricted range but relatively non-pivotably to the ignition switch and a cam portion that forms part of the steering lock mechanism, is inserted into and supported by the cylinder body so that, when pivoting from the OFF position to the operating force output position, it is necessary to push the inner cylinder by the defined amount prior to the pivoting operation, a pivoting member forming part of the operating force output mechanism and provided with an abutment retaining portion is pivotably supported on the inner cylinder, which is provided integrally with an engagement portion that can abut against and engage with the abutment retaining portion in response to being pushed by the defined amount at the OFF position, and the cylinder body is provided with a pivoting restricting portion for preventing the inner cylinder from pivoting toward the operating force output position side by abutting against the engagement portion when the inner cylinder is pushed by less than the defined amount at the OFF position.

According to a second aspect of the present invention, in addition to the arrangement of the first aspect, the operating force output position is set between the OFF position and the ON position, and restricting means is provided between the cylinder body and the inner cylinder, the restricting means preventing the inner cylinder from pivoting from the operating force output position toward the ON position side in a state in which the inner cylinder is pushed by the defined amount.

According to a third aspect of the present invention, in addition to the arrangement of the second aspect, the inner cylinder is inserted into and supported by the cylinder body so that, when the inner cylinder is pivoted from the OFF position to the locked position, it is required to be pushed by the defined amount prior to the pivoting operation, and the pivoting member is formed in a shape such that, when the inner cylinder that has been pushed by the defined amount is pivoted from the OFF position toward the locked position side, the pivoting member avoids engaging with the inner cylinder.

According to a fourth aspect of the present invention, in addition to the arrangement of the third aspect, second restricting means for restricting the end of pivoting of the inner cylinder toward the locked position side, third restricting means for restricting pivoting of the inner cylinder at the OFF position toward the locked position side, and fourth restricting means for restricting the end of pivoting of the inner cylinder toward the ON position side are provided between the cylinder body and the inner cylinder.

A seat lock release position P3 of an embodiment corresponds to the operating force output position of the present invention, a seat lock mechanism 14 of the embodiment corresponds to the external mechanism of the present invention, a cable 15 of the embodiment corresponds to the transmission cord of the present invention, and a slide member 66 of the embodiment corresponds to the actuating member of the present Invention.

### EFFECTS OF THE INVENTION

In accordance with the first aspect of the present invention, since, unless the inner cylinder is definitely pushed by the defined amount at the OFF position and the engagement portion of the inner cylinder can thereby abut against and engage with the abutment retaining portion of the pivoting member, pivoting of the inner cylinder toward the operating force output position side is prevented by the pivoting restricting portion, it is possible to pivot the pivoting member by means of reliable abutment and engagement due to the inner cylinder being pushed by the defined amount. Furthermore, the inner cylinder integrally having the switch connecting shaft portion and the cam portion is provided integrally with the engagement portion, and it is possible to obtain an ignition switch ON/OFF function and a function of outputting an operating force to the steering lock function and the external mechanism by a simple arrangement with a smaller number of components. Moreover, the pivoting member forming part of the operating force output mechanism is pivotably supported on the inner cylinder, and it becomes possible to precisely determine the relative positions between the engagement portion of the inner cylinder and the abutment retaining portion of the pivoting member, thus enabling reliable abutment and engagement.

In accordance with the second aspect of the present invention, since, when the inner cylinder is pushed at the OFF position, pivoting of the inner cylinder from the operating force output position toward the ON position side is prevented, when an operating force is outputted to the external mechanism, the ignition switch is not undesirably turned to the ON state, and the power consumption of the battery does not increase.

In accordance with the third aspect of the present invention, when the inner cylinder that has been pushed at the OFF position is pivoted toward the locked position side, pivoting of the inner cylinder is not transmitted to the pivoting member, and the steering lock mechanism alone can reliably be actuated.

In accordance with the fourth aspect of the present invention, it is possible to form a compact structure for reliably switching between the ignition switch ON/OFF function and the steering lock function by reliably determining the locked position, the OFF position, and the ON position by the second to fourth restricting means provided between the cylinder body and the inner cylinder integrally having the switch connecting shaft portion, the cam portion, and the engagement portion.

### BRIEF DESCRIPTION OF DRAWINGS

[FIG. 1] FIG. 1 is a simplified side view of a motorcycle (first embodiment).
[FIG. 2] FIG. 2 is an enlarged view from arrow 2 of a cylinder lock system at an ON position (first embodiment).
[FIG. 3] FIG. 3 is a sectional view along line 3-3 in FIG. 2 (first embodiment).
[FIG. 4] FIG. 4 is a sectional view along line 4-4 in FIG. 2 (first embodiment).
[FIG. 5] FIG. 5 is a sectional view along line 5-5 in FIG. 3 for showing actuation states of a steering lock mechanism at an OFF position, a locked position, and the ON position (first embodiment).
[FIG. 6] FIG. 6 is a sectional view along line 6-6 in FIG. 3 at the OFF position (first embodiment).
[FIG. 7] FIG. 7 is a sectional view along line 7-7 in FIG. 3 at the OFF position (first embodiment).
[FIG. 8] FIG. 8 is a view corresponding to FIG. 7 for showing in sequence the states at the locked position, a seat lock release position, and the ON position (first embodiment).
[FIG. 9] FIG. 9 is a sectional view along line 9-9 in FIG. 3 and FIG. 4 (first embodiment).
[FIG. 10] FIG. 10 is a sectional view along line 10-10 in FIG. 9 (first embodiment).
[FIG. 11] FIG. 11 is a sectional view along line 11-11 in FIG. 9 (first embodiment).
[FIG. 12] FIG. 12 is a sectional view corresponding to FIG. 9 in a state in which an operating force output mechanism outputs an operating force (first embodiment).
[FIG. 13] FIG. 13 is a sectional view along line 13-13 in FIG. 3 in a state in which the degree to which the inner cylinder is pushed is less than a defined amount (first embodiment).
[FIG. 14] FIG. 14 is a sectional view, corresponding to FIG. 13, of a second embodiment of the present invention (second embodiment).

### EXPLANATION OF REFERENCE NUMERALS AND SYMBOLS

| | |
|---|---|
| 14 | Seat lock mechanism, which is an external mechanism |
| 15 | Cable, which is a transmission cord |
| 16 | Handlebars |
| 19 | Steering lock mechanism |
| 20 | Ignition switch |
| 21 | Cylinder lock system |
| 24 | Cylinder body |
| 25 | Inner cylinder |
| 25b | Cam portion |
| 25d | Switch connecting shaft portion |
| 51 | Restricting means |
| 52 | Second restricting means |
| 53 | Third restricting means |
| 54 | Fourth restricting means |
| 63 | Operating force output mechanism |
| 64 | Pivoting member |
| 65 | Engagement portion |
| 66 | Slide member, which is an actuating member |
| 69 | Abutment retaining portion |
| 78 | Pivoting restricting portion |
| 80 | Mounting face |
| 90 | Outer cable |
| 91 | Inner cable |
| 97 | Cover |
| 101 | Retaining piece |
| P1 | Locked position |

### BEST MODE FOR CARRYING OUT THE INVENTION

Modes for carrying out the present invention are explained below by reference to embodiments of the present invention shown in the attached drawings.

### EMBODIMENT 1

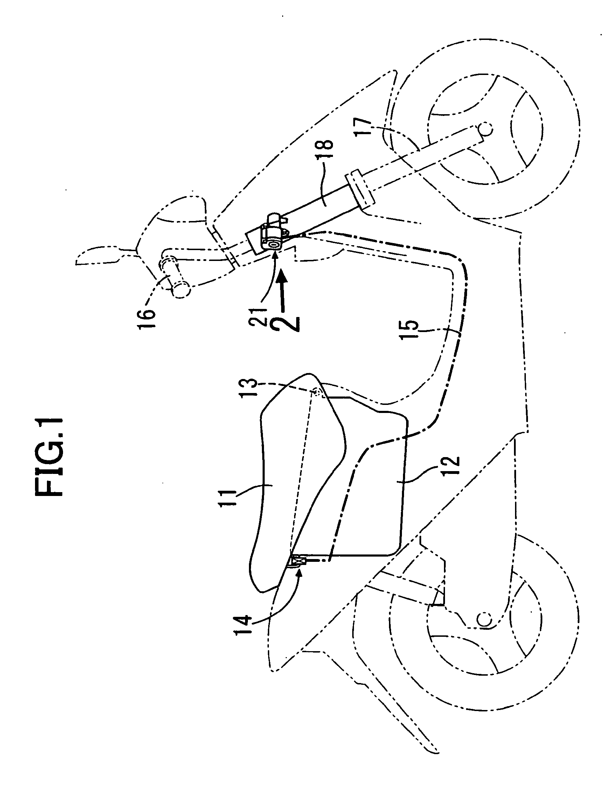

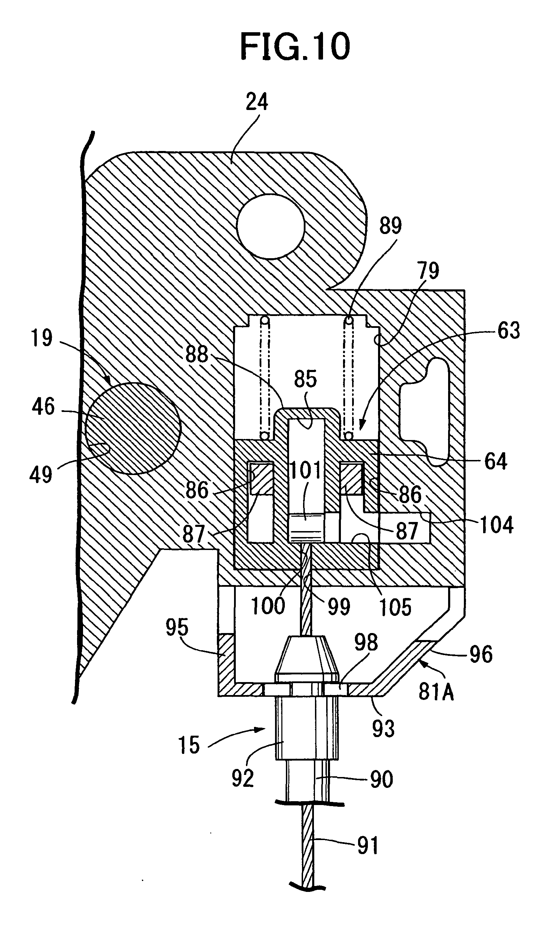

A first embodiment of the present invention is now explained by reference to FIG. 1 to FIG. 13.

First, in FIG. 1, in a rear portion of a vehicle body of, for example, a scooter type motorcycle, a rider's seat 11 for carrying a rider is pivotably connected to a front portion of a luggage box 12 via a support shaft 13 so that the rider's seat 11 can pivot between a position at which the luggage box 12, which is formed as an open top box shape and is disposed beneath the rider's seat 11, is closed by covering it from above and a position at which the rider's seat 11 pivots forward so as to open the luggage box 12, a seat lock mechanism 14 for maintaining the position of the rider's seat 11 in a state in which the luggage box 12 is closed is provided between a rear portion of the luggage box 12 and the rider's seat 11, and a locked state of the seat lock mechanism 14 is released by pulling a cable 15, which is a transmission cord.

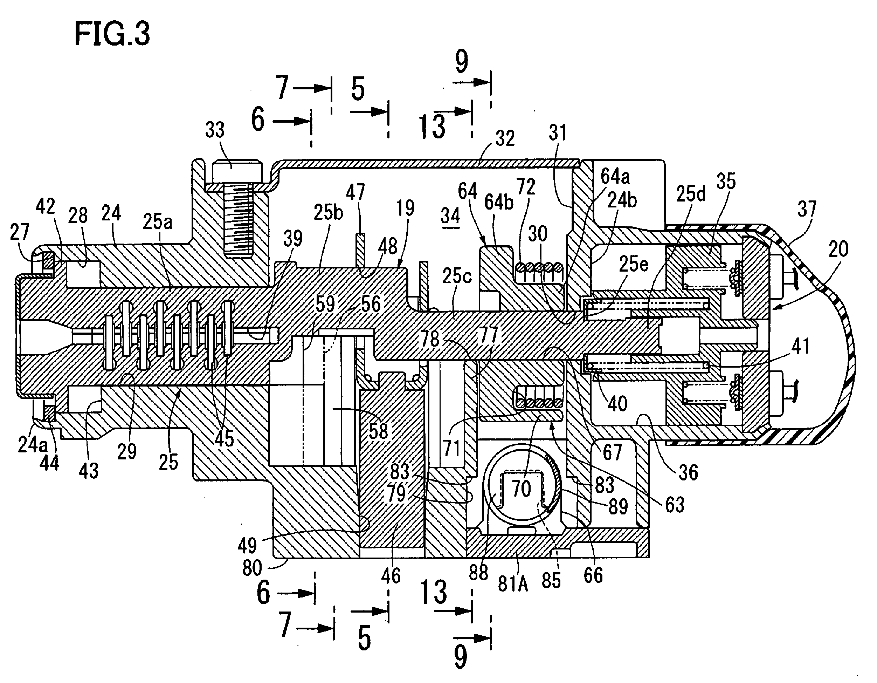

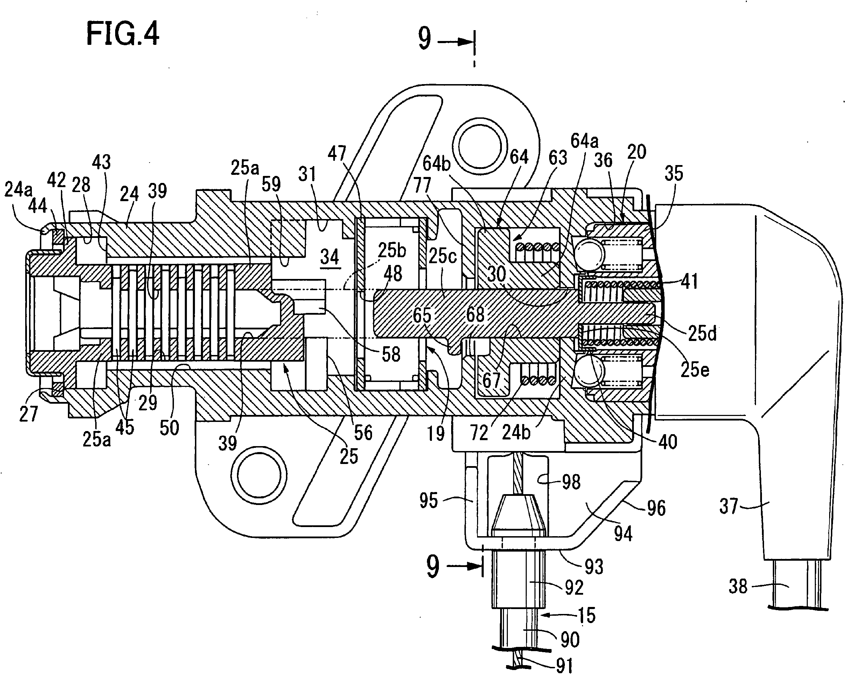

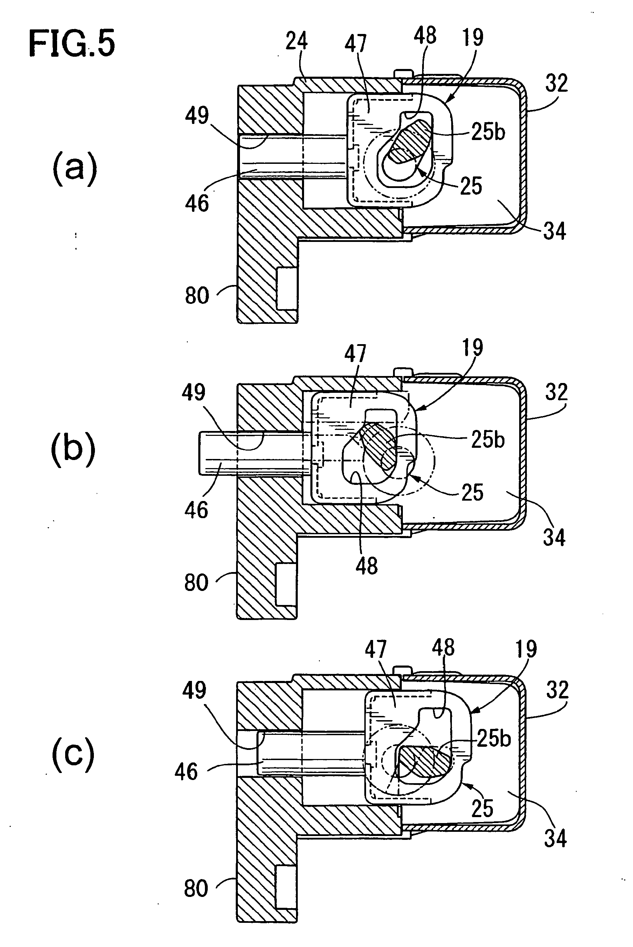

The vehicle body has a head pipe 18 at its front end, this head pipe 18 steerably supporting handlebars 16 and a front fork 17. The head pipe 18 is equipped with a cylinder lock system 21 that can lock and unlock a steering lock mechanism 19 (see FIG. 3 and FIG. 5) for disabling a steering operation of the handlebars 16 and that can switch a switching mode of an ignition switch 20 (see FIG. 3 and FIG. 4).

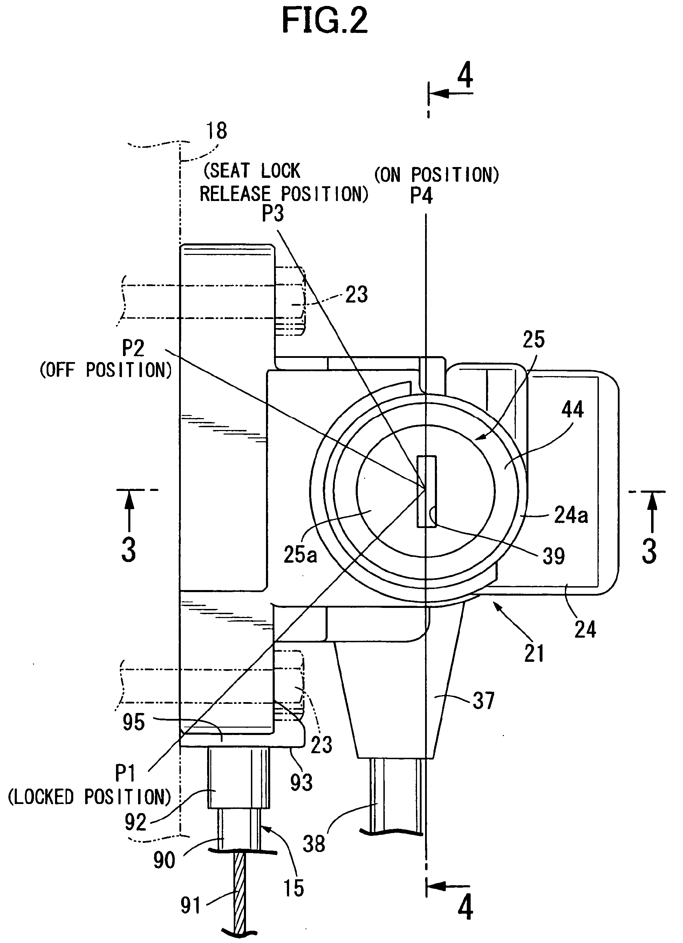

Referring in addition to FIG. 2 to FIG. 4, the cylinder lock system 21 includes a fixed cylinder body 24 mounted on the head pipe 18 via a plurality of bolts 23, and an inner cylinder 25 inserted into and supported by the cylinder body 24 so that it can be pivoted by a pivoting operation in a state in which a key (not illustrated) is inserted and is axially movable by being pushed at a predetermined pivot position.

A front end portion of the cylinder body 24 (see left end portion in FIG. 3 and FIG. 4) is provided with a cylindrical swaging tubular portion 24a and a flat ring-shaped receiving face 27 surrounded by the swaging tubular portion 24a. Furthermore, the cylinder body 24 is coaxially provided with a first hole 28, a second hole 29, and a third hole 30, the first hole 28 having one end opening on the receiving face 27, the second hole 29 having a smaller diameter than that of the first hole 28 and having one end coaxially connected to the other end of the first hole 28, and the third hole 30 being disposed to the rear of the second hole 29 (toward the right in FIG. 3 and FIG. 4) with a gap along the axial direction between itself and the second hole 29, and a recess 31 is provided between the second and third holes 29 and 30 so as to open toward the side opposite the head pipe 18. A body cover 32 covering an open end of the recess 31 is mounted on the cylinder body 24 via bolts 33, and the cylinder body 24 and the body cover 32 form a housing chamber 34.

The ignition switch 20 is mounted on a rear end portion of the cylinder body 24, the ignition switch 20 changing its switching mode in response to pivoting of the inner cylinder 25, the rear end portion of the cylinder body 24 is provided with a switch housing hole 36 into which a contact holder 35 of the ignition switch 20 is pivotably fitted, and the third hole 30 is provided in a dividing wall 24b provided on the cylinder body 24 so as to separate the switch housing hole 36 and the housing chamber 34, the third hole 30 providing a connection between the housing chamber 34 and the switch housing hole 36.

The rear end portion of the cylinder body 24 is equipped with a switch cover 37 covering the ignition switch 20, and a harness 38 connected to the ignition switch 20 is extended outside the switch cover 37.

The inner cylinder 25 is inserted into and supported by the cylinder body 24 as clearly shown in FIG. 2 so that it can pivot in sequence between a locked position P1, an OFF position P2, and an ON position P4, and a seat lock release position P3 is set in an intermediate section between the OFF position P2 and the ON position P4.

The inner cylinder 25 integrally has a rotor portion 25a, a cam portion 25b, a shaft portion 25c, and a switch connecting shaft portion 25d, the rotor portion 25a having a bottomed key insertion hole 39 for a legitimate key to be inserted thereinto and being fitted into the first and second holes 28 and 29, the cam portion 25b being formed in a crank shape and connected to the rotor portion 25a and being housed in the housing chamber 34, the shaft portion 25c being connected to the cam portion 25b coaxially with the rotor portion 25a, and the switch connecting shaft portion 25d having a noncircular shape and being connected to the shaft portion 25c. The shaft portion 25c is inserted into the third hole 30 in a pivotable and axially movable manner, and the switch connecting shaft portion 25d is fitted into and connected to the contact holder 35 of the ignition switch 20 so that they can move relatively in the axial direction but cannot pivot relatively around the axis. Moreover, a return spring 41 is provided in a compressed state between the contact holder 35 and a spring retainer 40 abutting against a step portion 25e formed between the shaft portion 25c and the switch connecting shaft portion 25d of the inner cylinder 25, and the inner cylinder 25 is resiliently urged forward (leftward in FIG. 3 and FIG. 4) by the spring force of the return spring 41.

A collar portion 42 is projectingly provided integrally with a front portion of the rotor portion 25a of the inner cylinder 25 so as to project radially outward, the collar portion 42 being inserted into the first hole 28 of the cylinder body 24 while being held between an annular step portion 43 formed between the first and second holes 28 and 29 of the cylinder body 24 and a ring plate 44 fixed to the cylinder body 24 by swaging the swaging tubular portion 24a in a state in which it abuts against the receiving face 27.

The rotor portion 25a of the inner cylinder 25 is provided with a plurality of tumblers 45 that can engage with engagement grooves 50 provided in the cylinder body 24 so as to open on an inner face of the second hole 29, the tumblers 45 being resiliently urged in a direction in which they engage with the engagement grooves 50, and each of the tumblers 45 being displaced to the side on which they disengage from the respective engagement groove 50 in response to a legitimate key being inserted into the key insertion hole 39, thereby enabling the inner cylinder 25 to pivot.

When the inner cylinder 25 is at the OFF position P2 and the ON position P4 it is at a forward position at which, as shown in FIG. 3 and FIG. 4, the collar portion 42 in the front portion abuts against the ring plate 44 due to a resilient force exhibited by the return spring 41; when it pivots from the OFF position P2 to the locked position P1 and it pivots to the seat lock release position P3, a pushing operation against the resilient force of the return spring 41 is required prior to the pivoting operation, and when it pivots to the locked position P1 and the seat lock release position P3, the inner cylinder 25 is at a retreated position at which the collar portion 42 abuts against the step portion 43 between the first and second holes 28 and 29.

In FIG. 5, the steering lock mechanism 19 is formed from the cam portion 25b of the inner cylinder 25, a lock pin 46 supported on the cylinder body 24 so that it can slide within a plane perpendicular to the axis of the inner cylinder 25, and a connecting member 47 that has the inner cylinder 25 running through and is fixed to the lock pin 46. The lock pin 46 is slidably supported in a slide hole 49 provided in the cylinder body 24 so as to switch between allowing and preventing a turning operation in response to pivoting of the inner cylinder 25, and the cam portion 25b of the inner cylinder 25 is connected to the connecting member 47 within the housing chamber 34. That is, the connecting member 47 is provided with a connection hole 48 for the cam portion 25b to be inserted though, and due to the cam portion 25b being formed in a crank shape, the lock pin 46 slides accompanying pivoting of the inner cylinder 25.

When the inner cylinder 25 is at the OFF position P2, as shown in FIG. 5 (a), the lock pin 46 is at a position at which its forward portion corresponds to an opening at the outer end of the slide hole 49; when the inner cylinder 25 is at the locked position P1, as shown in FIG. 5 (b), it is at a position at which its forward portion projects from the cylinder body 24 so as to prevent the turning operation; and when the inner cylinder 25 is at the ON position P4, as shown in FIG. 5 (c), the lock pin 46 retreats to a position at which its forward portion is retracted within the slide hole 49.

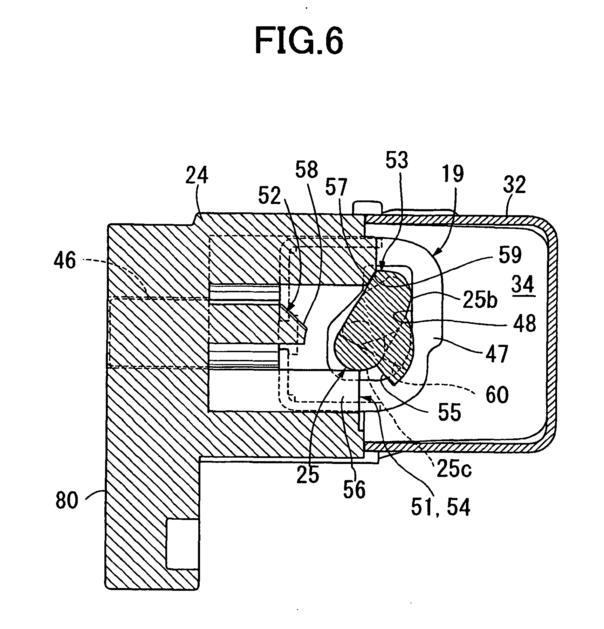

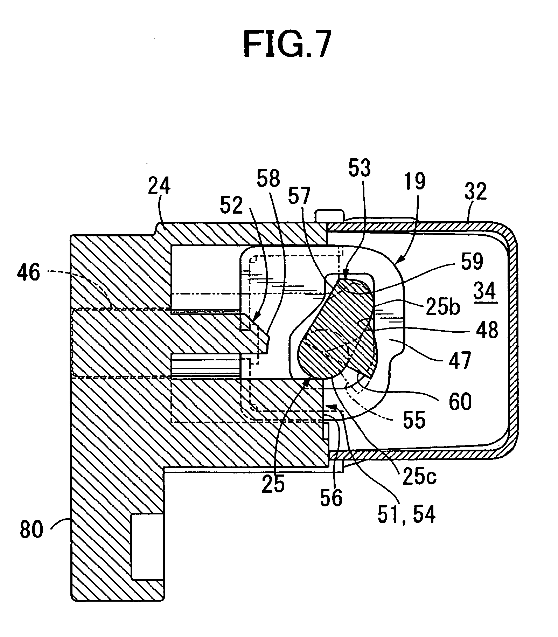

In FIG. 6 and FIG. 7, provided between the cylinder body 24 and the inner cylinder 25 are first restricting means 51, second restricting means 52, third restricting means 53, and fourth restricting means 54, the first restricting means 51 preventing the inner cylinder 25 from pivoting from the seat lock release position P3 to the ON position P4 side in a state in which the inner cylinder 25 is pushed by a defined amount, the second restricting means 52 restricting the end of pivoting of the inner cylinder 25 on the locked position P1 side, the third restricting means 53 restricting pivoting of the inner cylinder 25 at the OFF position P2 toward the locked position P1 side, and the fourth restricting means 54 restricting the end of pivoting of the inner cylinder 25 on the ON position P4 side.

The first restricting means 51 is formed from a first abutment face 55 provided in a portion connecting the rotor portion 25a and the cam portion 25b of the inner cylinder 25 and a first restricting projection 56 provided on the cylinder body 24 so that it abuts against the first abutment face 55 when the inner cylinder 25 pivots to the seat lock release position P3; the second restricting means 52 is formed from a second abutment face 57 provided in the portion connecting the rotor portion 25a and the cam portion 25b of the inner cylinder 25 and a second restricting projection 58 projectingly provided on the cylinder body 24 so that it abuts against the second abutment face 57 when the inner cylinder 25 pivots to the locked position P1; the third restricting means 53 is formed from the second abutment face 57 and a third restricting projection 59 projectingly provided on the cylinder body 24 so that it abuts against the second abutment face 57 when the inner cylinder 25 pivots to the OFF position P2; and the fourth restricting means 54 is formed from the first restricting projection 56 and a third abutment face 60 provided in the portion connecting the rotor portion 25a and the cam portion 25b of the inner cylinder 25.

The first abutment face 55 and the second abutment face 57 are provided at the same position axially on the portion connecting the rotor portion 25a and the cam portion 25b of the inner cylinder 25, and the third abutment face 60 is provided on the portion connecting the rotor portion 25a and the cam portion 25b on the side to the rear of the first and second abutment faces 55 and 57, that is, on the cam portion 25b side. The first restricting projection 56 is projectingly provided on the cylinder body 24 so that, when the inner cylinder 25 is pushed by the defined amount, the first restricting projection 56 can abut against the first abutment face 55 but does not abut against the third abutment face 60, and when the inner cylinder 25 is not pushed, it can abut against the third abutment face 60 but does not abut against the first abutment face 55. The second restricting projection 58 is projectingly provided on the cylinder body 24 so that, when the inner cylinder 25 is pushed by the defined amount, it can abut against the second abutment face 57, and the third restricting projection 59 is projectingly provided on the cylinder body 24 so that, when the inner cylinder 25 is not pushed, it can abut against the second abutment face 57, but when the inner cylinder 25 is pushed by the defined amount, it does not abut against the second abutment face 57.

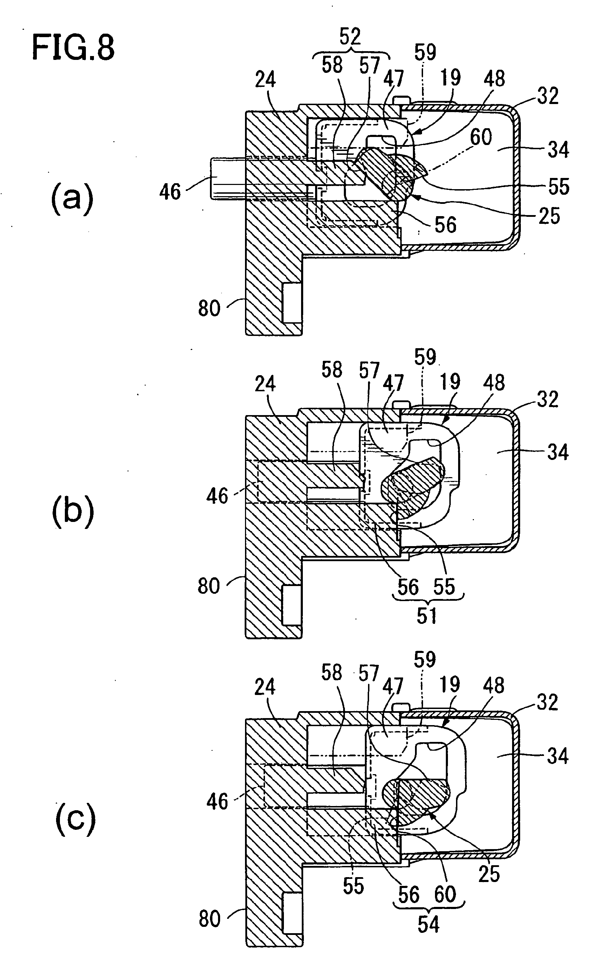

When the inner cylinder 25 is at the OFF position P2 without being pushed, as shown in FIG. 6 and FIG. 7, the second abutment face 57 of the inner cylinder 25 abuts against the third restricting projection 59, and pivoting of the inner cylinder 25 from the OFF position P2 toward the locked position P1 side is restricted by the third restricting means 53. Furthermore, when the inner cylinder 25 that has been pushed by the defined amount at the OFF position P2 is pivoted to the locked position P1, as shown in FIG. 8 (a), the second abutment face 57 of the inner cylinder 25 abuts against the second restricting projection 58, and the end of pivoting of the inner cylinder 25 toward the locked position P1 side is restricted by the second restricting means 52. Moreover, when the inner cylinder 25 that has been pushed by the defined amount at the OFF position P2 is pivoted to the seat lock release position P3, as shown in FIG. 8 (b), the first abutment face 55 of the inner cylinder 25 abuts against the first restricting projection 56, and pivoting of the inner cylinder 25 toward the ON position P4 side is restricted by the first restricting means 51. When the inner cylinder 25 that is not being pushed is pivoted to the ON position P4, as shown in FIG. 8 (c), the third abutment face 60 of the inner cylinder 25 abuts against the first restricting projection 56, and the end of pivoting of the inner cylinder 25 toward the ON position P4 side is restricted by the fourth restricting means 54.

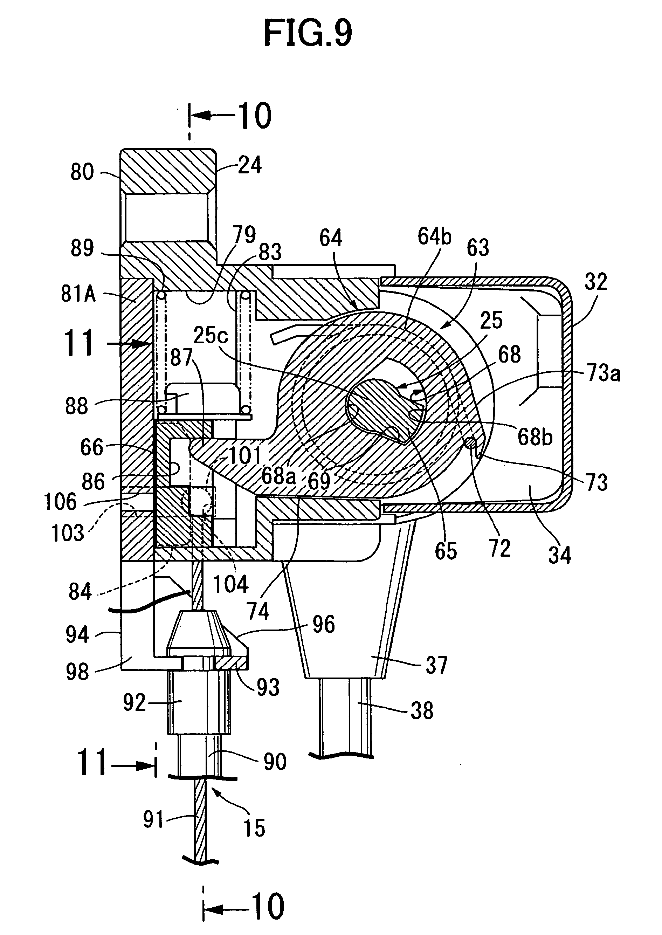

In FIG. 9 to FIG. 11, the cylinder lock system 21 includes an operating force output mechanism 63 for converting a pivoting force generated when the inner cylinder 25 is pivoted from the OFF position P2 to the seat lock release position P3 into an operating force for moving the seat lock mechanism 14 toward the seat lock release side and outputting the operating force, the operating force output mechanism 63 including a pivoting member 64 pivotably supported by the shaft portion 25c of the inner cylinder 25, an engagement portion 65 projectingly provided integrally with the shaft portion 25c of the inner cylinder 25 so that the engagement portion 65 can engage with the pivoting member 64 in response to the inner cylinder 25 being pushed by the defined amount, and a slide member 66 supported on the cylinder body 24 so as to slide in response to the pivoting member 64 engaged with the engagement portion 65 pivoting together with the inner cylinder 25.

The pivoting member 64 integrally has a cylindrical portion 64a and a collar portion 64b extending radially outward from the front end of the cylindrical portion 64a (the left end in FIG. 3 and FIG. 4), and the pivoting member 64 is provided with an insertion hole 67 for the shaft portion 25c of the inner cylinder 25 to be inserted into and an engagement hole 68 connected to the front end of the insertion hole 67 so that it can engage with the engagement portion 65 when the inner cylinder 25 is pushed by the defined amount at the OFF position P2.

The engagement portion 65 projects radially outward from the shaft portion 25c of the inner cylinder 25, and is projectingly provided integrally with the shaft portion 25c at a position such that it is in front of the pivoting member 64 when the inner cylinder 25 is not pushed but it enters the engagement hole 68 in response to the inner cylinder 25 being pushed by the defined amount at the OFF position P2.

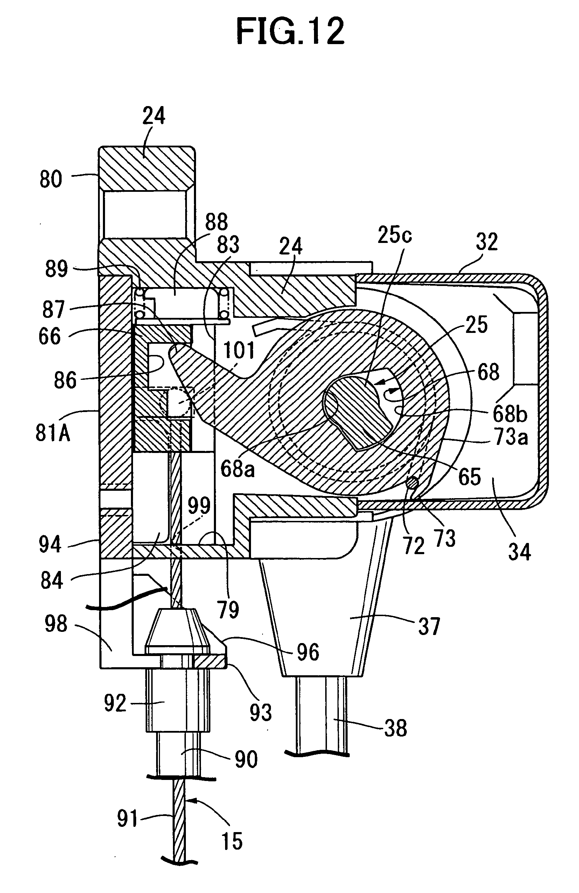

The engagement hole 68 is formed by connecting a semicircular portion 68a for substantially half of the periphery of the shaft portion 25c to be inserted into and a fan-shaped portion 68b formed in a fan shape with the semicircular portion 68a at its pivot position so that, when the inner cylinder 25 at the OFF position P2 is pushed by the defined amount, the engagement portion 65 can enter the fan-shaped portion 68b, and a side wall portion at one end of the periphery of the fan-shaped portion 68b (the lower end in FIG. 9) is formed as an abutment retaining portion 69 that can abut against and engage with the engagement portion 65 of the inner cylinder 25. Moreover, when the seat lock mechanism 14 remains in the locked state, the slide member 66 is at a position shown in FIG. 9; here, the engagement portion 65 of the inner cylinder 25 pushed by the defined amount at the OFF position P2 enters the engagement hole 68 so as to move close to and face the abutment retaining portion 69, and when the inner cylinder 25 is pivoted clockwise in FIG. 9 from the OFF position P2 to the seat lock release position P3 while it is pushed by the defined amount, as shown in FIG. 12, the engagement portion 65 abuts against and engages with the abutment retaining portion 69, thus making the pivoting member 64 pivot in the clockwise direction.

Furthermore, when the inner cylinder 25 pushed by the defined amount is pivoted in an anticlockwise direction in FIG. 9 from the OFF position P2 to the locked position P1, the engagement portion 65 is displaced to a position at which it moves close to and faces a side wall on the side opposite to the abutment retaining portion 69 within the fan-shaped portion 68b, and a force is not applied from the inner cylinder 25 to the pivoting member 64. That is, the pivoting member 64 is formed in a shape such that it avoids engaging with the inner cylinder 25 when the inner cylinder 25 pushed by the defined amount is pivoted from the OFF position P2 toward the locked position P1 side.

An arc-shaped wall portion 70 surrounding part of the cylindrical portion 64a is projectingly provided integrally with the outer periphery of the collar portion 64b of the pivoting member 64 so as to form an arc-shaped groove 71 between itself and the cylindrical portion 64a, and as clearly shown in FIG. 3 a torsion spring 72 that is partially housed in the groove 71 and encircles the cylindrical portion 64a is provided between the cylinder body 24 and the pivoting member 64. One end of the torsion spring 72 is engaged with an engagement projection 73 provided integrally with the outer periphery of the collar portion 64a of the pivoting member 64 so as to project sideways, and an outer face 73a extending from the outer periphery of the collar portion 64b to the engagement projection 73 is formed as an inclined face that moves away from the axis of the inner cylinder 25 in going to the tip of the engagement projection 73 in order to make engagement of the one end of the torsion spring 72 easy.

Due to the spring force exhibited by the torsion spring 72, the pivoting member 64 is urged to pivot in an anticlockwise direction in FIG. 9 and FIG. 12, and the pivoting member 64 is provided with a restricting portion 74 that abuts against the cylinder body 24 so as to restrict the end of pivoting in the direction in which pivoting is urged by the torsion spring 72.

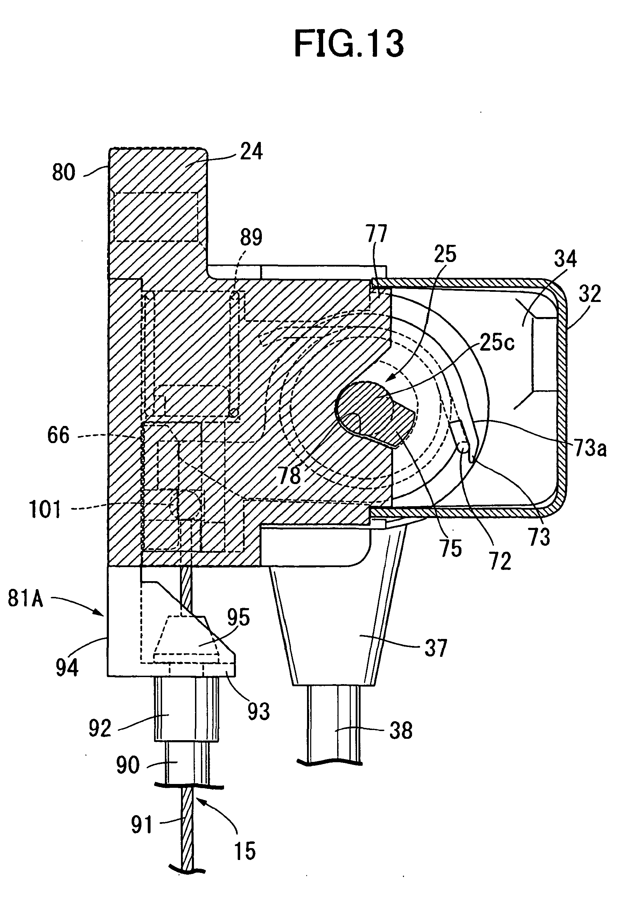

Referring in addition to FIG. 13, a restricting wall portion 77 positioned between the pivoting member 64 and the engagement portion 65 of the inner cylinder 25 in the non-pushed state is provided integrally with the cylinder body 24, and this restricting wall portion 77 is provided with a pivoting restricting portion 78 as a substantially V-shaped recess so that the shaft portion 25c of the inner cylinder 25 is inserted therethrough. The pivoting restricting portion 78 is formed in a shape such that, when the seat lock mechanism 14 remains in the locked state and the pivoting member 64 makes the restricting portion 74 abut against the cylinder body 24, it substantially overlaps the engagement hole 68 of the pivoting member 64, and when the inner cylinder 25 is between the locked position P1 and the OFF position P2 and is pushed, the engagement portion 65 of the inner cylinder 25 can pass through the pivoting restricting portion 78 without contacting the restricting wall portion 77. Furthermore, when the pushing force is released from the inner cylinder 25 at the locked position P1, the inner cylinder 25 returns to a forward position so that the engagement portion 65 passes through the pivoting restricting portion 78 from the engagement hole 68 of the pivoting member 64.

Moreover, when the inner cylinder 25 is being pushed by less than the defined amount at the OFF position P2, pivoting the inner cylinder 25 toward the seat lock release position P3 side makes the engagement portion 65 abut against the pivoting restricting portion 78, thus restricting pivoting of the inner cylinder 25 toward the seat lock release position P3 side.

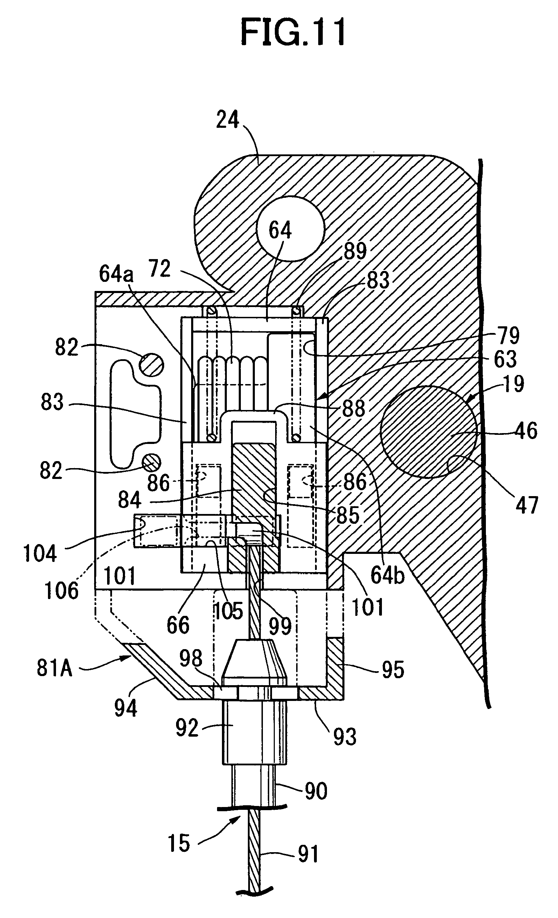

Referring again to FIG. 9 to FIG. 12, the cylinder body 24 is provided at a position corresponding to the pivoting member 64 with a housing recess 79 communicating with the housing chamber 34 so that it opens on a side opposite to the body cover 32, that is, on the side where a mounting face 80 of the cylinder body 24 is mounted on the head pipe 18, and a lid member 81A that is flush with the mounting face 80 is mounted on the cylinder body 24 by a plurality, for example, a pair, of screw members 82 and 82 (see FIG. 11) so as to close the open end of the housing recess 79 on the mounting face 80. The lid member 81A is thus mounted on the cylinder body 24 so as to be held between the cylinder body 24 and the head pipe 18 of the vehicle body.

The housing recess 79 is formed in a rectangular shape extending lengthwise vertically within a plane perpendicular to the axis of the inner cylinder 25 and the axis of the lock pin 46, and a pair of step portions 83 and 83 facing the lid member 81A side are provided on opposite side walls of the housing recess 79. The slide member 66 is slidably housed in the housing recess 79 so that, of opposite sides of the slide member 66, one face on the pivoting member 64 side is in sliding contact with the step portions 83 and the other face on the side opposite to the pivoting member 64 is in sliding contact with the lid member 81A, and a guide projection 84 projectingly provided integrally with the lid member 81A is fitted into a guide recess 85 provided in the slide member 64.

Fitting recesses 86 and 86 extending lengthwise in the slide direction of the slide member 66 are provided in opposite sides of one face of the slide member 66 facing the pivoting member 64. A pair of arm portions 87 and 87 extending from the restricting portion 74 toward the slide member 66 side are provided integrally with the pivoting member 64, and forward end portions of the arm portions 87 are fitted into the two fitting recesses 86. Furthermore, a circular cross-section projection 88 is provided integrally with an upper portion of the slide member 66, and a return spring 89, which is a coil spring, is provided in a compressed state between the cylinder body 24 and the upper portion of the slide member 66 so that part of the return spring 89 encircles the projection 88. The return spring 89 exhibits a spring force urging the slide member 66 toward the side that makes it abut against the two arm portions 87 of the pivoting member 64, and the slide member 66 slides in response to pivoting of the pivoting member 64.

When the inner cylinder 25 is at the OFF position P2 and the pivoting member 64 has the restricting portion 74 abutting against the cylinder body 24 as shown in FIG. 9, the slide member 66 is at a lower limit position as shown in FIG. 9 to FIG. 11, and when the pivoting member 64 pivots in a clockwise direction as shown in FIG. 12 in response to the inner cylinder 25 pushed by the defined amount pivoting from the OFF position P2 to the seat lock release position P3, the slide member 66 is displaced to an upper limit position against the spring force of the return spring 89 so as to make the projection 88 abut against the cylinder body 24.

The cable 15 is a push/pull cable formed by movably inserting an inner cable 91 into the interior of an outer cable 90, and a support tube 92 provided at one end of the outer cable 90 is engaged with a support plate portion 93 provided integrally with the lid member 81A and positioned beneath the cylinder body 24. That is, the lid member 81A is projectingly provided integrally with an extension plate portion 94 that is flush with the mounting face 80 and extends beneath the cylinder body 24, and the support plate portion 93 is provided so as to be integrally connected at right angles to the extremity of the extension plate portion 94. Triangular reinforcing plate portions 95 and 96 are provided so as to be integrally connected to opposite sides of the support plate portion 93 and opposite sides of the extension plate portion 94. Moreover, the support plate portion 93 and the extension plate portion 94 are provided with an opening 98 for making the support tube 92 engage with the support plate portion 93.

One end portion of the inner cable 91 projecting from the support tube 92 runs movably through a lower end wall of the cylinder body 24 facing the support plate portion 93, and a retaining piece 101 fixed to one end of the inner cable 91 is housed in the guide recess 85 of the slide member 66 so as to abut against and engage with an inner face of the lower end wall. That is, the connection between the slide member 66 and the cable 15 is disposed within the cylinder body 24 on the side where the mounting face 80 is mounted on the head pipe 18 so that the connection is interposed between the cylinder body 24 and the head pipe 18 of the vehicle body.

The retaining piece 101 is formed in a short columnar shape, and one end of the inner cable 91 is fixed to a longitudinally middle section of the retaining piece 101. The slide member 66 at the lower limit position in the locked state of the seat lock mechanism 14 is displaced to the upper limit position as shown in FIG. 12 as a result of the pivoting member 64 pivoting in response to the inner cylinder 15 pushed by the defined amount at the OFF position P2 being pivoted to the seat lock release position P3, and in response to the slide member 66 sliding an operating force for pulling the cable 15 acts on the cable 15 from the slide member 66, thereby releasing the seat lock mechanism 14.

The cylinder body 24 and the lid member 81A are provided with a slit 99 for one end portion of the inner cable 91 to be inserted into in a state in which the retaining piece 101 is abutting against and engaged with the slide member 66, and an insertion groove 100 for inserting the one end portion of the inner cable 91 is provided in a lower end wall of the slide member 66, the insertion groove 100 communicating with the slit 99.

In order to make the retaining piece 101 easily engage with and be connected to the slide member 66, the retaining piece 101, which is secured to one end of the inner cable 91 of the cable 15, engages with and is connected to the slide member 66 by moving it toward the slide member 66 side from a position offset from the slide member 66 in a direction that is different from the direction of action of the operating force acting on the cable 15 from the slide member 66.

That is, the lid member 81A is provided, at a position offset sideways from the housing recess 79, with an insertion hole 103 (see FIG. 9) for the retaining piece 101 to be inserted into, the cylinder body 24 is provided with an insertion recess 104 communicating with the insertion hole 103, and the slide member 66 is provided with a communicating groove 105 for providing communication between the insertion recess 104 and the guide recess 85 in the lower limit position. Displacing the retaining piece 101 inserted into the insertion recess 104 via the insertion hole 103 toward the slide member 66 in the lower limit position enables the retaining piece 101 to be housed in the guide recess 85 and abut against and engage with the slide member 66.

The lid member 81A is provided with a slit 106 for allowing the one end portion of the inner cable 91 to move when the retaining piece 101 is moved from the insertion recess 104 to the slide member 66 side, the slit 106 corresponding to the communicating groove 105.

The operation of the first embodiment is now explained. The inner cylinder 25 integrally has the switch connecting shaft portion 25d, which is connected relatively axially movably within a restricted range but relatively non-pivotably to the ignition switch 20, and the cam portion 25b, which forms part of the steering lock mechanism 19, and is provided integrally with the engagement portion 65; the inner cylinder 25 is inserted into and supported by the cylinder body 24 so that, when pivoting from the OFF position P2 to the seat lock release position P3, it is necessary to push it by the defined amount prior to the pivoting operation, and the pivoting member 64, which forms part of the operating force output mechanism 63, is pivotably supported on the inner cylinder 25, the pivoting member 64 having the abutment retaining portion 69 for making the engagement portion 65 abut thereagainst and engage therewith in response to being pushed by the defined amount at the OFF position P2.

It is therefore possible to obtain an ignition switch 20 ON/OFF function, a steering lock function, and a function of outputting an operating force to the seat lock mechanism 14 by a simple arrangement with a smaller number of components. Moreover, the pivoting member 64 forming part of the operating force output mechanism 63 is pivotably supported on the inner cylinder 25, and it becomes possible to precisely determine the relative positions between the engagement portion 65 of the inner cylinder 25 and the abutment retaining portion 69 of the pivoting member 64, thus enabling reliable abutment and engagement.

Furthermore, since the cylinder body 24 is provided with the pivoting restricting portion 78, which prevents the inner cylinder 25 from pivoting toward the seat lock release position P3 side by abutting against the engagement portion 65 when it is pushed by less than the defined amount at the OFF position P2, unless the inner cylinder 25 is reliably pushed by the defined amount at the OFF position P2 and the engagement portion 65 of the inner cylinder 25 can thereby abut against and engage with the abutment retaining portion 69 of the pivoting member 64, pivoting of the inner cylinder 25 toward the seat lock release position P3 side is prevented by the pivoting restricting portion 78, and it is possible to pivot the pivoting member 64 by means of reliable abutment and engagement due to the inner cylinder 25 being pushed by the defined amount.

Furthermore, since the seat lock release position P3 is set between the OFF position P2 and the ON position P4, and the first restricting means 51 is provided between the cylinder body 24 and the inner cylinder 25, the first restricting means 51 preventing the inner cylinder 25 from pivoting from the seat lock release position P3 to the ON position P4 side in a state in which the inner cylinder 25 is pushed by the defined amount, when the inner cylinder 25 is pushed at the OFF position P2, pivoting of the inner cylinder 25 from the seat lock release position P3 toward the ON position P4 side is prevented, and when an operating force is outputted to the seat lock mechanism 14, the ignition switch 20 is not undesirably turned to the ON state and the power consumption of the battery does not increase.

Moreover, since the inner cylinder 25 is inserted into and supported by the cylinder body 24 so that, when pivoting from the OFF position P2 to the locked position P1, it is necessary to push it by the defined amount prior to the pivoting operation, and the pivoting member 64 is formed in a shape such that it avoids engaging with the inner cylinder 25 when the inner cylinder 25 pushed by the defined amount is pivoted from the OFF position P2 toward the locked position P1 side, when the inner cylinder 25 that has been pushed at the OFF position P2 is pivoted toward the locked position P1 side, pivoting of the inner cylinder 25 is not transmitted to the pivoting member 64, and the steering lock mechanism 19 alone can reliably be actuated.

Furthermore, since there are provided between the cylinder body 24 and the inner cylinder 25 the second restricting means 52 restricting the end of pivoting of the inner cylinder 25 on the locked position P1 side, the third restricting means 53 restricting pivoting of the inner cylinder 25 at the OFF position P2 toward the locked position P1 side, and the fourth restricting means 54 restricting the end of pivoting of the inner cylinder 25 on the ON position P4 side, it is possible to form a compact structure for reliably switching the ON/OFF function of the ignition switch 20 and the steering lock function by reliably determining the locked position P1, the OFF position P2, and the ON position P4 by the second to fourth restricting means 52 to 54 provided between the cylinder body 24 and the inner cylinder 25 integrally having the switch connecting shaft portion 25d, the cam portion 25b, and the engagement portion 65.

Moreover, since the connection between the cable 15 and the slide member 66 forming part of the operating force output mechanism 63 is disposed within the cylinder body 24 on the side where the mounting face 80 is mounted on the vehicle body so that the connection is interposed between the cylinder body 24 and the head pipe 18 of the vehicle body, the connection between the slide member 66 and the cable 15 is covered by the cylinder body 24 and the head pipe 18 of the vehicle body in a state in which the cylinder body 24 is mounted on the vehicle body side, and it is thereby possible to prevent unauthorized access to the connection between the slide member 66 and the cable 15 and maintain the connected state of the slide member 66 and the cable 15, thus preventing undesirable release of the locked state of the seat lock mechanism 14.

Furthermore, since, as a result of the retaining piece 101 secured to one end of the cable 15 moving toward the slide member 66 side from a position that is offset from the slide member 66 in a different direction from the direction in which the operating force acts on the cable 15 from the slide member 66, it is engaged with and connected to the slide member 66, it is possible to connect the cable 15 to the slide member 66 with a smaller number of components by making it unnecessary to employ a special member for connecting the cable 15 to the slide member 66 while ensuring that the connected state of the cable 15 is not released by sliding of the slide member 66.

### EMBODIMENT 2

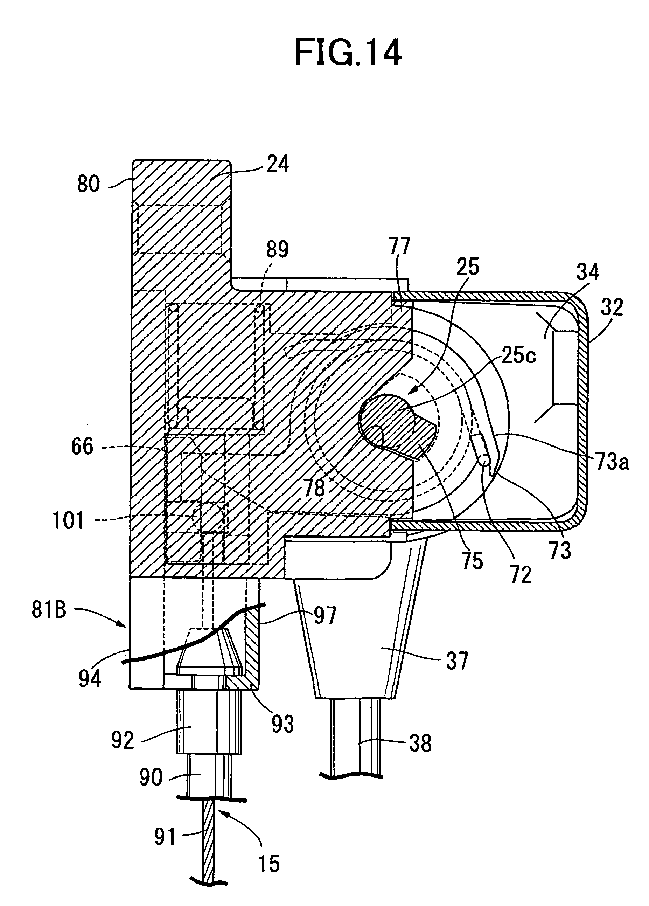

A second embodiment of the present invention is explained by reference to FIG. 14; portions corresponding to those of the first embodiment shown in FIG. 1 to FIG. 13 are illustrated using the same reference numerals and numbers, and a detailed explanation thereof is omitted.

A lid member 81 B is mounted on a cylinder body 24 so as to be flush with a mounting face 80 thereof, the lid member 81 B being held between the cylinder body 24 and a head pipe 18 of a vehicle body, and an extension plate portion 94 extending beneath the cylinder body 24 and a support plate portion 93 connected at right angles to the extremity of the extension plate portion 94 are provided so as to be connected integrally to the lid member 81 B, which is further provided integrally with a cover 97.

The cover 97 is formed so as to cover a part, of an inner cable 91 of a cable 15, that is disposed between the cylinder body 24 and a portion of an outer cable 90 fixed to the cylinder body 24, that is, an engagement portion of a support tube 92 with the support plate portion 93.

In accordance with the second embodiment, since, of the inner cable 91, the part disposed between the cylinder body 24 and the portion of the outer cable 90 fixed to the cylinder body 24 is covered by the cover 97, and the cover 97 is provided integrally with the lid member 81 B mounted on the cylinder body 24 while being held between the cylinder body 24 and the vehicle body, it is possible to prevent an unauthorized attack on the cylinder body side of the cable 15, thus more reliably preventing undesirable release of the locked state of a seat lock mechanism 14.

Embodiments of the present invention are explained above, but the present invention is not limited to the above-mentioned embodiments and may be modified in a variety of ways as long as the modifications do not depart from the spirit and scope of the present invention.

## Claims

1. A vehicular cylinder lock system comprising a fixed cylinder body (24), an inner cylinder (25) inserted into and supported by the cylinder body (24) so as to be axially movable and pivotable in a restricted range, an ignition switch (20), a steering lock mechanism (19) for disabling a steering operation of handlebars (16), and an operating force output mechanism (63) for converting a pivoting force of the inner cylinder (25) into an operating force for an external mechanism (14) and outputting it, the inner cylinder (25) having set around a pivot axis an OFF position (P2), an ON position (P4) at which the ignition switch (20) attains an ON state in response to the inner cylinder (25) pivoting from the OFF position (P2) toward one side, a locked position (P1) at which the steering lock mechanism (19) is actuated so that steering is disabled in response to the inner cylinder (25) pivoting from the OFF position (P2) toward the other side, and an operating force output position (P3) at which the operating force output mechanism (63) outputs an operating force in response to the inner cylinder (25) pivoting from the OFF position (P2) toward said one side or said other side, and when carrying out either one of a pivoting operation of the inner cylinder (25) from the OFF position (P2) to the one of the locked position (P1) and the ON position (P4) that is disposed on the same side as the operating force output position (P3) relative to the OFF position (P2), or a pivoting operation of the inner cylinder (25) from the OFF position (P2) to the operating force output position (P3), the inner cylinder (25) being required to be pushed by a defined amount prior to the pivoting operation, **characterized in that** the inner cylinder (25), which integrally has a switch connecting shaft portion (25d) connected relatively axially movably within a restricted range but relatively non-pivotably to the ignition switch (20) and a cam portion (25b) that forms part of the steering lock mechanism (19), is inserted into and supported by the cylinder body (24) so that, when pivoting from the OFF position (P2) to the operating force output position (P3), it is necessary to push the inner cylinder (25) by the defined amount prior to the pivoting operation, a pivoting member (64) forming part of the operating force output mechanism (63) and provided with an abutment retaining portion (69) is pivotably supported on the inner cylinder (25), which is provided integrally with an engagement portion (65) that can abut against and engage with the abutment retaining portion (69) in response to being pushed by the defined amount at the OFF position (P2), and the cylinder body (24) is provided with a pivoting restricting portion (78) for preventing the inner cylinder (25) from pivoting toward the operating force output position (P3) side by abutting against the engagement portion (65) when the inner cylinder (25) is pushed by less than the defined amount at the OFF position (P2).

2. The vehicular cylinder lock system according to Claim 1, wherein the operating force output position (P3) is set between the OFF position (P2) and the ON position (P4), and restricting means (51) is provided between the cylinder body (24) and the inner cylinder (25), the restricting means (51) preventing the inner cylinder (25) from pivoting from the operating force output position (P3) toward the ON position (P4) side in a state in which the inner cylinder (25) is pushed by the defined amount.

3. The vehicular cylinder lock system according to Claim 2, wherein the inner cylinder (25) is inserted into and supported by the cylinder body (24) so that, when the inner cylinder (25) is pivoted from the OFF position (P2) to the locked position (P1), it is required to be pushed by the defined amount prior to the pivoting operation, and the pivoting member (64) is formed in a shape such that, when the inner cylinder (25) that has been pushed by the defined amount is pivoted from the OFF position (P2) toward the locked position (P1) side, the pivoting member (64) avoids engaging with the inner cylinder (25).

4. The vehicular cylinder lock system according to Claim 3, wherein second restricting means (52) for restricting the end of pivoting of the inner cylinder (25) toward the locked position (P1) side, third restricting means (53) for restricting pivoting of the inner cylinder (25) at the OFF position (P2) toward the locked position (P1) side, and fourth restricting means (54) for restricting the end of pivoting of the inner cylinder (25) toward the ON position (P4) side are provided between the cylinder body (24) and the inner cylinder (25).

## Patentansprüche

1. Fahrzeugzylinderschlosssystem, umfassend einen festen Zylinderkörper (24), einen Innenzylinder (25), der in den Zylinderkörper (24) eingesetzt ist und von diesem gehalten wird, sodass er in einem eingeschränkten Bereich axial bewegt und gedreht werden kann, einen Zündschalter (20), einen Lenkschlossmechanismus (19) zum Blockieren einer Lenkoperation einer Lenkstange (16) und einen Betätigungskraftausgabemechanismus (63), um eine Drehkraft des Innenzylinders (25) in eine Betätigungskraft für einen externen Mechanismus (14) zu konvertieren und sie auszugeben, wobei bei dem Innenzylinder (25) um eine Drehachse herum angeordnet sind: eine AUS-Position (P2), eine AN-Position (P4), bei der der Zündschalter (20) einen AN-Zustand erreicht als Reaktion darauf, dass sich der Innenzylinder (25) von der AUS-Position (P2) zu einer Seite dreht, eine verriegelte Position (P1), bei der der Lenkschlossmechanismus (19) betätigt ist, sodass das Lenken blockiert ist als Reaktion darauf, dass sich der Innenzylinder (25) von der AUS-Position (P2) zur anderen Seite dreht, und eine Betätigungskraftausgabeposition (P3), bei der der Betätigungskraftausgabemechanismus (63) eine Betätigungskraft als Reaktion darauf ausgibt, dass sich der Innenylinder (25) von der AUS-Position (P2) zu der einen oder der anderen Seite dreht, und wenn entweder eine Drehoperation des Innenzylinders (25) von der AUS-Position (P2) zu der verriegelten Position (P1) oder der AN-Position (P4), die relativ zu der AUS-Position (P2) auf der gleichen Seite wie die Betätigungskraftausgabeposition (P3) angeordnet ist, oder eine Drehoperation des Innenzylinders (25) von der AUS-Position (P2) zu der Betätigungskraftausgabeposition (P3) durchgeführt wird, der Innenzylinder (25) vor der Drehoperation um ein definiertes Ausmaß gedrückt werden muss,
**dadurch gekennzeichnet, dass** der Innenzylinder (25), der integral einen Schalterverbindungswellenabschnitt (25d), der innerhalb eines eingeschränkten Bereichs relativ axial beweglich verbunden ist, aber relativ zu dem Zündschalter (20) nicht drehbar ist, und einen Nockenabschnitt (25b) aufweist, der Teil des Lenkschlossmechanismus (19) bildet, in den Zylinderkörper (24) eingesetzt und von diesem gehalten wird, sodass beim Drehen aus der AUS-Position (P2) zur Betätigungskraftausgabeposition (P3) der Innenzylinder (25) vor der Drehbewegung um das definierte Ausmaß gedrückt werden muss, wobei ein Drehglied (64), das einen Teil des Betätigungskraftausgabemechanismus (63) bildet und mit einem Anschlagshalteabschnitt (69) versehen ist, drehbar an dem Innenzylinder (25) gehalten wird, der integral mit einem Eingriffsabschnitt (65) versehen ist, der an dem Anschlagshalteabschnitt (69) anschlagen und diesen in Eingriff nehmen kann als Reaktion auf das Drücken um das definierte Ausmaß an der AUS-Position (P2), und der Zylinderkörper (24) mit einem Dreheinschränkungsabschnitt (78) versehen ist zum Verhindern eines Drehens des Innenzylinders (25) zu der Seite der Betätigungskraftausgabeposition (P3) durch Anschlagen gegen den Eingriffsabschnitt (65), wenn der Innenzylinder (25) an der AUS-Position (P2) um weniger als das definierte Ausmaß gedrückt wird.

2. Fahrzeugzylinderschlosssystem nach Anspruch 1, wobei die Betätigungskraftausgabeposition (P3) zwischen der AUS-Position (P2) und der AN-Position (P4) eingestellt ist und Einschränkungsmittel (51) zwischen dem Zylinderkörper (24) und dem Innenzylinder (25) vorgesehen sind, wobei die Einschränkungsmittel (51) ein Drehen des Innenzylinders (25) aus der Betätigungskraftausgabeposition (P3) zu der Seite der EIN-Position (P4) in einem Zustand verhindern, in dem der Innenzylinder (25) um das definierte Ausmaß gedrückt wird.

3. Fahrzeugzylinderschlosssystem nach Anspruch 2, wobei der Innenzylinder (25) in den Zylinderkörper (24) eingesetzt ist und von diesem gehalten wird, sodass, wenn der Innenzylinder (25) aus der AUS-Position (P2) zu der verriegelten Position (P1) gedreht wird, er vor der Drehoperation um ein definiertes Ausmaß gedrückt werden muss, und das Drehglied (64) zu einer derartigen Gestalt ausgebildet ist, dass, wenn der Innenzylinder (25), der um das definierte Ausmaß gedrückt worden ist, aus der AUS-Position (P2) zu der Seite der verriegelten Position (P1) gedreht worden ist, das Drehglied (64) die Eingriffnahme mit dem Innenzylinder (25) vermeidet.

4. Fahrzeugzylinderschlosssystem nach Anspruch 3, wobei zweite Einschränkungsmittel (52) zum Einschränken des Drehendes des Innenzylinders (25) zu der Seite der verriegelten Position (P1), dritte Einschränkungsmittel (53) zum Einschränken des Drehens des Innenzylinders (25) an der AUS-Position (P2) zu der Seite der verriegelten Position (P1) und vierte Einschränkungsmittel (54) zum Einschränken des Drehendes des Innenzylinders (25) zu der Seite der AN-Position (P4) zwischen dem Zylinderkörper (24) und dem Innenzylinder (25) vorgesehen sind.

## Revendications

1. Système de verrouillage à cylindre pour véhicule comprenant un corps de cylindre fixe (24), un cylindre intérieur (25) inséré dans et supporté par le corps de cylindre (24) afin d'être mobile axialement et de pouvoir pivoter dans une plage limitée, un contact d'allumage (20), un mécanisme de verrouillage de direction (19) pour désactiver une opération de direction du guidon (16), et un mécanisme de sortie de force opérationnelle (63) pour transformer une force de pivotement du cylindre intérieur (25) en une force opérationnelle pour un mécanisme externe (14) et la délivrer, le cylindre intérieur (25) ayant, établies autour d'un axe pivot, une position ARRÊT (P2), une position MARCHE (P4), dans laquelle le contact d'allumage (20) atteint un état MARCHE en réponse au pivotement du cylindre intérieur (25) de la position ARRÊT (P2) vers un premier côté, une position verrouillée (P1), dans laquelle le mécanisme de verrouillage de direction (19) est actionné de sorte que la direction soit désactivée en réponse au pivotement du cylindre intérieur (25) de la position ARRÊT (P2) vers l'autre côté, et une position de sortie de force opérationnelle (P3), dans laquelle le mécanisme de sortie de force opérationnelle (63) délivre une force opérationnelle en réponse au pivotement du cylindre intérieur (25) de la position ARRÊT (P2) vers ledit premier côté ou ledit autre côté, et en effectuant l'une ou l'autre d'une opération de pivotement du cylindre intérieur (25) de la position ARRÊT (P2) vers celle de la position verrouillée (P1) et de la position MARCHE (P4) qui est disposée du même côté que la position de sortie de force opérationnelle (P3) par rapport à la position ARRÊT (P2), ou d'une opération de pivotement du cylindre intérieur (25) de la position ARRÊT (P2) vers la position de sortie de force opérationnelle (P3), le cylindre intérieur (25) devant nécessairement être poussé d'une quantité définie avant l'opération de pivotement, **caractérisé en ce que** le cylindre intérieur (25), qui comporte d'un seul tenant une partie d'arbre de connexion de commutateur (25d) couplée de manière relativement axiale de façon à pouvoir se déplacer dans une plage limitée, mais sans pouvoir pivoter par rapport au contact d'allumage (20), et une partie de came (25b) qui fait partie du mécanisme de verrouillage de direction (19) est insérée dans et supportée par le corps de cylindre (24) de sorte que, en pivotant de la position ARRÊT (P2) à la position de sortie de force opérationnelle (P3), il soit nécessaire de pousser le cylindre intérieur (25) de la quantité définie avant l'opération de pivotement, un élément pivotant (64) faisant partie du mécanisme de sortie de force opérationnelle (63) et muni d'une partie de retenue de butée (69) est supporté à pivotement sur le cylindre intérieur (25), qui est réalisé d'un seul tenant avec une partie d'engagement (65) qui peut s'abouter contre la partie de retenue de butée (69) et s'y engager en réponse à sa poussée de la quantité définie dans la position ARRÊT (P2), et le corps de cylindre (24) est muni d'une partie de limitation de pivotement (78) pour empêcher le cylindre intérieur (25) de pivoter vers le côté position de sortie de force opérationnelle (P3) en s'aboutant contre la partie d'engagement (65) quand le cylindre intérieur (25) est poussé de moins de la quantité définie dans la position ARRÊT (P2).

2. Système de verrouillage à cylindre pour véhicule selon la revendication 1, dans lequel la position de sortie de force opérationnelle (P3) est fixée entre la position ARRÊT (P2) et la position MARCHE (P4), et un moyen de limitation (51) est prévu entre le corps de cylindre (24) et le cylindre intérieur (25), le moyen de limitation (51) empêchant le cylindre intérieur (25) de pivoter de la position de sortie de force opérationnelle (P3) vers le côté de position MARCHE (P4) dans un état dans lequel le cylindre intérieur (25) est poussé de la quantité définie.

3. Système de verrouillage à cylindre pour véhicule selon la revendication 2, dans lequel le cylindre intérieur (25) est inséré dans et supporté par le corps de cylindre (24) de sorte que, lorsque le cylindre intérieur (25) pivote de la position ARRÊT (P2) à la position verrouillée (P1), il soit nécessaire qu'il soit poussé de la quantité définie avant l'opération de pivotement, et l'élément pivotant (64) est formé de sorte que, lorsque le cylindre intérieur (25) qui a été poussé de la quantité définie pivote de la position ARRÊT (P2) vers le côté de position verrouillée (P1), l'élément pivotant (64) évite de s'engager sur le cylindre intérieur (25).

4. Système de verrouillage à cylindre pour véhicule selon la revendication 3, dans lequel un deuxième moyen de limitation (52) pour limiter la fin du pivotement du cylindre intérieur (25) vers le côté de position verrouillée (P1), un troisième moyen de limitation (53) pour limiter le pivotement du cylindre intérieur (25) dans la position ARRÊT (P2) vers le côté de position verrouillée (P1), et un quatrième moyen de limitation (54) pour limiter la fin du pivotement du cylindre intérieur (25) vers le côté de position MARCHE (P4) sont prévus entre le corps de cylindre (24) et le cylindre intérieur (25).
